# EUROPEAN PATENT APPLICATION

(11) **EP 2 818 257 A1**
(43) Date of publication of application: **31.12.2014**
(21) Application number: 14174636.2
(22) Date of filing: 27.06.2014
(51) Int. Cl.: B09B 3/00, C10B 49/00, C10B 53/00, F23G 5/00, F23G 5/44

(54) **Equipment for thermal decomposition of organic material and gas production used to generate heat and electricity**

(30) Priority: 27.06.2013 CZ 20130506
(71) Applicant: Zakaryan, Vladimir, 700 30 Ostrava-Zabreh (CZ)
(72) Inventor: Zakaryan, Vladimir, 700 30 Ostrava-Zabreh (CZ)
(74) Representative: Stenger, Watzke & Ring

(57) **Abstract**

The equipment for thermal decomposition of organic material and gas production used to generate heat and electricity

The equipment according to the invention consists of the basic thermolysis unit containing a closed thermal furnace with a minimum of one reactor connected by a pipe with a cooling vessel with a circulating cooling liquid. The thermolysis decomposition of organic input material containing a maximum of 15 weight % of inorganic components with a maximum of 10% moisture content can result in the formation of gaseous, liquid as well as solid fuel, while achieving the maximum yield of sufficiently pure gas to be used for heat and electricity generation in a suitable manner by using cogeneration units. The possibility of using several thermolysis units ensures continuity of operation and makes it possible to achieve performance of various intensities. The design of the equipment makes it possible to carry out the entire process without energy losses.

## Description

### Field of the invention

The invention relates to equipment for thermal decomposition of organic material without access of air in order to form gas utilisable in the entire volume to generate heat and electricity.

### Background of the invention

The thermal process taking place without the access of air (pyrolysis), can be described as a physical-chemical phenomenon, where the input material is affected in a closed space by a temperature exceeding its chemical stability threshold. It is a reduction thermal process resulting in a thermal decomposition of organic components in the material.

This is a process of splitting macro-molecular organic matter down to stable low-molecular products and solid residues. The first stage of the process is drying, physical stripping of water, i.e. creation of water vapour. The next stage is the so-called "dry distillation", where lateral chains are split off the high-molecular organic matter forming simpler gaseous and liquid organic products resulting in the formation of solid carbon residues. At the third stage, the products of dry distillation are further split and the organic substances are converted into stable gases (e.g. H₂, CO₂, CO, CH₄).

The composition and proportions between the products of pyrolysis are influenced by several factors. The composition of the products of pyrolysis depends largely on the composition of the input material, proportion of the organic and inorganic components and the size of the input material particles. The yield of the specific fractions (liquid, gaseous and solid states) is furthermore affected by the final temperature of the pyrolysis process, heating velocity, gaseous product retention time in the pyrolytic chamber, presence of a catalyser and the material/catalyser ratio, pressure and design of the pyrolysis unit.

The pyrolysis process is suitable for efficient and economical waste processing. A major share of municipal waste consists of organic matter. Based on expert opinions, more than 60% of municipal waste forms a potential secondary raw material which may be further processed and utilised. Solid municipal waste is a rich source of secondary raw materials (including metals, as well as thinly dispersed materials) as well as a source of "free-of-charge" energy. The thermal decomposition of municipal waste, besides reduced volume and weight, makes it possible to obtain an additional source of energy, which may be utilised in central and district heating and to generate electricity. For each city and residential estate, the removal and elimination of solid municipal waste is largely an environmental issue in terms of environmental pollution caused mainly by gaseous products of combustion released during waste disposal processes.

The design of the equipment for thermal decomposition of mainly organic waste intends to prevent from the escape of formed gas largely through its retention in closed vessels or returns loop back to the thermolysis chamber, where use is also made of its temperature to heat the waste mass, such as the design as per CZ21978 or a partial use is made to heat the waste in an external heat exchanger as specified by documents CZ19601 or RU2408820. The combustion product exhaust pipe usually includes a cooled section where the combustion product components condense into oil which is further used as a liquid fuel.

These types of equipment usually deal with the efficiency and energy demands of the entire process. For this reason, the original single-chamber furnace space has been replaced with a design using a mobile container which enables its replacement after the termination of the thermal process with another container, already filled with further waste. However, this replacement cannot be done without a certain time delay accompanied by a thermal loss due to the necessary cooling of the original container and heating of the new one to the desired temperature. This problem is to a certain extent resolved by the presence of a minimum of two mobile containers in the furnace space as specified by the design under CZ22609, where each of them has an outlet leading to branch pipes retaining oil or gas, so that during the simultaneous operation of both containers, oil or gas is extracted from each of them. However, in terms of the secondary raw material yield, waste is insufficiently utilised for gas production.

Various types of material heating methods are also used, either based on a separate circulation of return gas flow in the heating chamber or, for example, based on heating elements moving inside the furnace chamber. For example, in patent document US2009218209 are used metal heated balls. However, these heating methods require material mixing inside the furnace during the process or they often employ rotary furnaces.

Equipments used so far for thermal waste decomposition without the access of air are not designed in a way for achieving adequate output and enabling the maximum use of this process to obtain the maximum possible volume of secondary raw materials for further use, mainly gas of sufficient purity. The equipments in use to date do not make it possible to ensure continuity of the entire process without energy losses.

### Summary of the invention

The aforesaid shortcomings are solved by the equipment according to the invention, which enables the maximum energy use of the organic material containing a maximum of 15 weight % of inorganic compounds and a maximum of 10 % of moisture content for the production of sufficiently pure gas in the continuous process without energy losses and without the necessity of using additional mechanical equipment, such as for transport of material, its mixing, and drying inside the furnace or the use of a rotary furnace. The equipment does not use any external pressure changes or catalyser.

The subject of the invention is the equipment for thermal decomposition of material with a high share of organic matter without the access of air for gas production, including a thermal furnace with a chamber heated by heaters, while the inner space of the furnace contains reactors cooled by a ventilator connected by a cooling pipe to the bottom part of the furnace. The furnace is connected to the cooling vessel by a pipe fitted with a separator. The cooling vessel passes into a pipe exhausting gas, while the equipment contains at least two basic units, each of them consisting of a thermal furnace connected to the cooling vessel fitted with a cooler. Inside the furnace there is at least one thermal reactor surrounded by a closed prism-shaped cladding behind whose two opposite sides there are ceramic heaters separated from the cladding by an air gap and on the other side they are lined with a refractory sheet metal and insulation plates fitted along all furnace sides. All lateral sides of the furnace are covered on the outside with the furnace cladding. One end of each reactor is fitted with a closable inlet opening and the other side with a closable outlet opening. Both these openings discharge into the external space of the furnace. Each of the reactors is equipped on the outside of the furnace with a discharge combustion product opening leading into a collecting pipe discharging combustion products which leads to the pipe in the cooling vessel via a connecting pipe. One common collecting pipe is connected to the outlets of two up to eight reactors and this collecting pipe, connecting pipe and pipe in the cooling vessel form a separate branch pipe with an outlet to the gas exhaust pipe. The pipe in the cooling vessel of each branch forms at least four bends along the cooling vessel width under the cooling liquid.

The width of the cooling vessel is usually 4 m - 5.5 m and the pipe in the cooling vessel of each branch forms at least four bends along the vessel width under the cooling liquid. The liquid components condense along a sufficiently long pipe section, which contributes to the purity of the obtained gas.

In an embodiment of the invention the cooling vessel is filled with the cooling liquid circulating in the vessel by means of a circulation pump and each branch pipe in the cooling vessel is connected with a separator leading into a separation tank with an oil pump.

In a preferred embodiment of the invention, the gas exhaust pipe of each unit discharges into a common gas exhaust pipe.

The gas exhaust pipe leads from the cooling vessel of the unit and then discharges into a low-pressure gas holder connected with a gas purification station, which is connected to a compressor, or the gas exhaust pipe leads from the cooling vessel of the unit and discharges into the common gas exhaust pipe leading into the low-pressure gasholder connected with the gas purification station connected to the compressor.

The material is preferably sorted, crushed, mixed and dried to the maximum moisture content of 10 %. Nevertheless, sorting, crushing, mixing and drying is not a precondition. For example, waster rubber (rubber granules) can also be processed with cord, and the residual iron can be removed after the process. In terms of material savings and heating it is advisable to crush the material to particle size of ca. 2 cm - 5 cm.

In the equipment designed according to the invention the thermolysis process takes place at temperatures between 300 °C and 650 °C, which makes it possible to process input organic materials containing a maximum of 15 weight% of inorganic components, such as biomass and bio-waste (wastewater treatment plant sludge, animal excrements, meat and bone meal, waste from bio-processes), waster rubber, separated municipal waste, industrial waste, toxic waste and waste plastics.

Thanks to the fact, that the reactors of the furnace are surrounded by closed cladding separating the heaters insulated from the external environment by insulation plates and from the reactor cladding by an air layer, heat from the thermal furnace does not uselessly escape. The furnace is a closed body, where the reactors are only cooled in a controlled way by a ventilator cooling to the required temperature. This construction enables a flexible and gradual reaching of the temperature change without energy losses and even and thorough heating of the entire material volume.

Thermal decomposition without the presence of air and the heating process result in the fact, that using the equipment the input materials may be converted into products, that can be used as a fuel to generate heat or electricity. The product of the thermal process is thermolysis gas (with a minimum content of combustible gas of 55 %) formed in the condensation of pyrolytic vapours in the cooler. Thermolysis gas is then used to power cogeneration unit engines to generate heat and electricity. Another product is thermolysis oil which, once the solid particles are filtered off and potentially after water separation, can be used as a liquid fuel. The third product is thermolytic coke, which can be used in households as well as industries as a solid fuel.

The thermolysis process of processing input material in the equipment according to the invention takes place discontinuously so that the input material is fed automatically or manually through the inlet openings into the reactors inside the thermal furnace, where the material is heated and thermally decomposed without the access of air. The thermal furnace and reactors with the input material are heated by heaters, i.e. electric heating plates located along the sides of the internal part of the furnace. The temperature curve of the thermolysis process of treating the input material is precisely controlled in dependence on the time and type of the input material, so as to achieve the highest possible gas yield and resulting el. energy from the relevant type of input material. Each material has its own characteristic temperature curve. The released hot mixture (150-200 °C) of thermolytic vapours spontaneously escapes through the openings in the reactors located in their upper third and are drained into a pipe submerged in the cooling liquid in the cooling vessel, where the vapour condenses and the liquid oil component is separated from the gaseous component in the separator. Each unit contains its own cooling vessel, where the combustion products from 2 up to 8 reactors get condensed in separate branches, which results in sufficiently clean and dry gas following the liquid component separation.

The gaseous component is fed by the gas exhaust pipe into the gas holder, then into the gas purification station and then it is fed into gas cylinders by means of a compressor or the gas is used on site to generate heat and electricity in a cogeneration unit. Once the thermolysis is over (1 cycle = max. 180 min), the thermal furnace and reactors are cooled down to a safe temperature (100 - 120 °C) and the outlet openings in the bottom of the reactors can be used to empty the thermolysis coke (solid residues).

In the embodiment according to the invention it is necessary to use a minimum of 2 units consisting of the thermal furnace and the cooling vessel in order to ensure continuity of gas production without energy losses. While the thermal decomposition of input material is taking place in one of the furnaces, the second thermal furnace may be let cool down, clean and refill. The thermal furnace may also be operated simultaneously. The engagement of two or more units results in the formation equipment of various sizes for outputs such as 200 kW - 1MW. The process in the thermolysis equipment is designed to ensure the decomposition of all the material during the process and the maximum use of the material energy during the thermolysis while obtaining the greatest possible volume of pure and dry gas as the main product with no tar content, and conveying the entire volume for further utilisation in heat and electrical power generation.

The equipment according to the invention does not harm the environment. The entire process is designed as fully automatic. It is controlled by electronic, acoustic and visual systems providing protection against unexpected situations. The equipment may be installed inside a building or in an open space, without a necessary connection to a water main and sewer. The equipment is of a small size, easy to relocate and easy to maintain - this can be ensured by two trained employees.

### Brief description of drawings

Fig. 1: Diagram of the basic equipment unit consisting of a thermal furnace with reactors, cooled by a ventilator, where the furnace is connected by a connecting pipe with the cooling vessel; side and top view.
Fig. 2: General view of the equipment including the connection of two basic units of the furnace with cooling vessel, where a gas exhaust pipe leads from each cooling vessel and discharges into a common gas exhaust pipe from the units, connected to the low-pressure gas holder and gas purification station, from where the gas is filled into gas cylinders by means of a compressor for further use; side and top view.

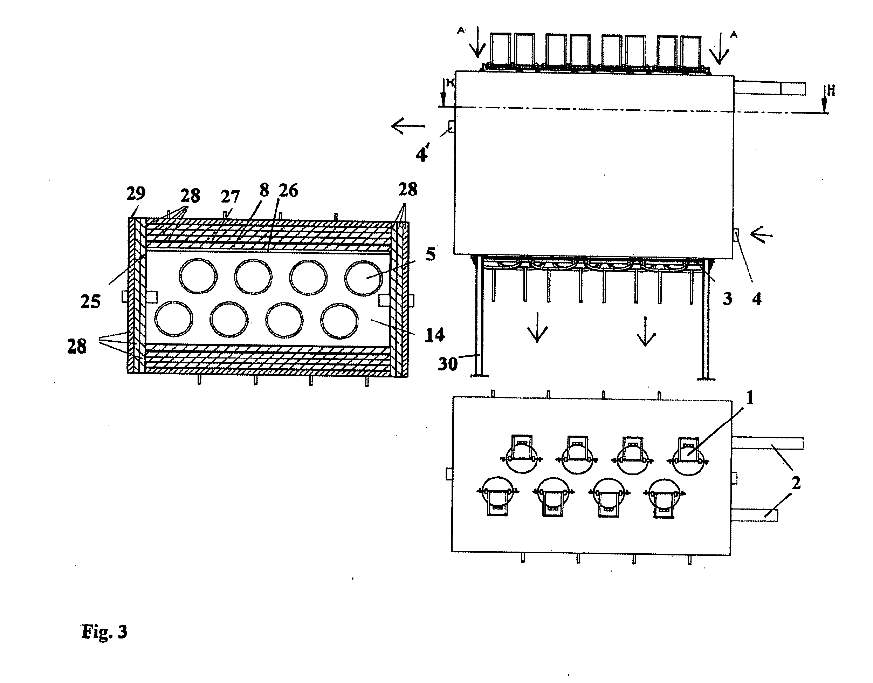

Fig. 3: Side, top view and "H" cross section of the thermal furnace showing the internal design of the furnace with reactors, cladding, heaters and insulation layers.

### Example of the invention embodiment

Equipment for thermal decomposition of organic material (waste) with two basic thermolysis units.

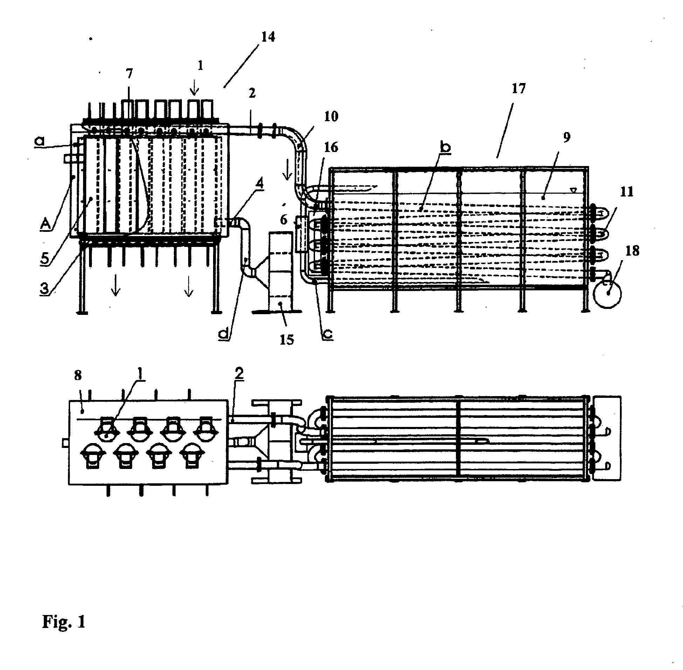

Equipment for thermal decomposition of organic material contains two basic thermolysis units (Fig. 1) consisting of a thermal furnace 14 fixed on legs 30 connected to the cooling vessel 17 fitted with a cooler 16. Each furnace 14 is equipped with a total of eight thermal reactors 5 in two lines. The upper end of each reactor 5 is fitted with an inlet opening 1 with a cover leading to the external space outside the thermal furnace 14 and the lower end is fitted with an outlet opening 3 with a cover leading to the external space outside the thermal furnace 14. Reactors 5 are cooled by a ventilator 15 connected with the thermal furnace 14 by a cooling pipe 4. The thermal reactors 5 are surrounded by a closed prism-shaped cladding 25. Two of its opposite sides are fitted with ceramic heaters 8 separated from the cladding 25 by an air gap 26 and from the other side they are lined with a refractory sheet metal 27 and insulation plates 28 fitted over all the walls of the furnace 14. All lateral sides of the furnace 14 are covered on the outside with cladding 29. Heaters 8 (electrically heated plates) ensure sufficient temperature of the thermal furnace 14, thermal reactors 5 and input material. Each reactor 5 is fitted at one end with a closable inlet opening 1 and at the other end with a closable outlet opening 3, and both openings 1, 3 empty into the external space of the furnace 14 and each of reactors 5 is fitted with in the external space of the furnace 14 in its upper third with an opening 7 for combustion product exhausting. Openings 7 of four the reactors in one line discharge into a collection pipe 2 for combustion products. The combustion products are discharged through the collecting pipe 2 via the connecting pipe 10 to the pipe 11 in the cooling vessel 17 with a size of 4 m. Cooling liquid 9 in the vessel 17 circulates via a circulation pump 6. Pipe 11 in the cooling vessel 17 is fitted with a separator 18 connected to the separation tank 19 and oil pump 20. Pipe 11 leads from the cooling vessel 17 to the gas exhaust pipe 12. The entire pipe leading from the combustion product collection pipe 2 from four reactors 5 to the gas exhaust pipe 12 forms a separate branch. Pipe 11 in the cooling vessel 17 of each branch forms six bends along the width of the vessel 17 under the cooling liquid 9.

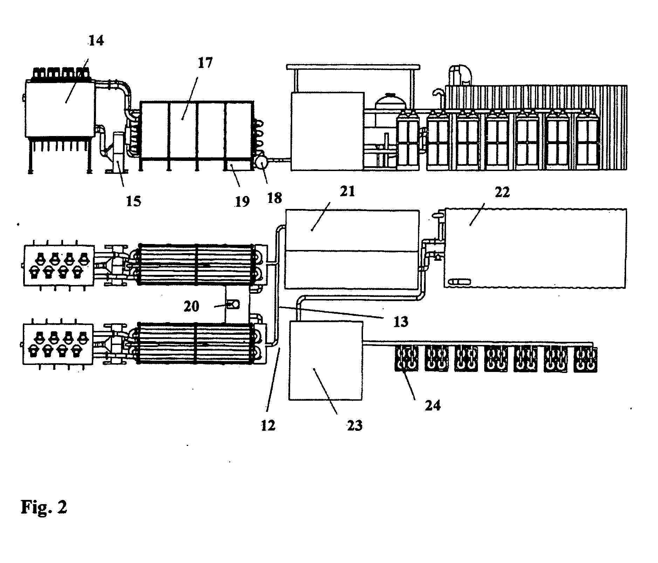

The gas exhaust pipes 12 of both the thermolysis units are connected downstream the cooling vessels 17 into a common gas exhaust pipe 13 extracting thermolytic gas, discharging into a low-pressure gas holder 21, from where into the gas purification station 22, where the gas is filled in gas cylinders 24 (Fig. 2) via compressor 23.

Waste rubber as input material crushed into pieces size 2 - 5 cm is fed manually or automatically through feeding inlet openings 1 into the thermal reactors 5 of both thermal furnaces 14 and reactors 5 gets closed by the covers. The thermal reactors 5 are easy to fill without the need of pulling them out of the furnace. The thermal furnace 14 gets heated by the heaters 8 to a temperature of 550°C. Pyrolysis vapours formed through the decomposition of waste pass through combustion products outlet openings 7 in the reactors 5 and to the common collecting pipe 2 and from here through the connecting pipe 10 to the pipe 11 submerged in cooling liquid 9 in cooling vessel 17 fitted with a cooler 16. Cooling liquid 9 in the cooling vessel 17 circulates by means of the circulation pump 6. Condensed liquid oil component is extracted from the pipe 11 using a separator 18 to a separation tank 19 for further use as a fuel. Thermolysis gas then flows through the gas exhaust pipe 12 from both cooling vessels into a common gas exhaust pipe 13 connected to the low pressure gas holder 21, and from here to the purification station 22, where the gas is cleaned and using a compressor 23 it is filled into gas cylinders 24 for further use- heat and electricity production. Once the thermolysis is over (in 180 minutes), the thermal furnace 14 with the reactors 5 is cooled down using a ventilator 15, connected to the thermal furnace 14 in its lower part by the cooling pipe 4 leading into the internal space of the thermal furnace 14 between the thermal reactors 5. Once the ventilator 15 ensures cooling down to the safe temperature (100°C - 120°C), the covers of the outlet openings 3 of the thermal reactors 5 get open and the solid residues of the material fall out in the form of thermolysis coke which can be utilised as a fuel.

Based on the required performance, the equipment may contain more than two basic thermolysis units. The units may be operated simultaneously or in turns, which ensures continuity of operation.

### Industrial applicability

The equipment of the invention makes efficient use of the organic input material of any kind as the source of renewable energy. The thermolysis decomposition of the input material containing a maximum of 15 weight % of inorganic component thus results in the formation of gaseous, liquid as solid fuel, while achieving the maximum yield of sufficiently pure gas for the generation of heat and electricity using cogeneration units. The use of several thermolysis units ensures continuity of heat and electricity generation and the equipment variability makes it possible to achieve outputs of various intensities. The design of the equipment makes it possible to carry out the entire process without energy losses. The equipment can be easily relocated and the automatic process is easy to operate.

**List of reference numbers**

| | |
|---|---|
| 1 - reactor inlet opening | a - thermal decomposition of input material |
| 2 - combustion products common collecting pipe | |
| 3 - reactor outlet opening | b - furnace combustion product cooling |
| 4 - inlet cooling pipe | |
| 4' - outlet cooling pipe | c - cooling liquid circulation |
| 5 - thermal reactor | d - reactor cooling |
| 6 - circulation pump | |
| 7 - combustion products outlet opening | |
| 8 - heater | |
| 9 - cooling liquid | |
| 10 - connecting pipe | |
| 11 - pipe in cooling vessel | |
| 12 - gas exhaust pipe | |
| 13 - common gas exhaust pipe | |
| 14 - thermal furnace | |
| 15 - ventilator | |
| 16 - cooler | |
| 17 - cooling vessel | |
| 18 - separator | |
| 19 - separation tank | |
| 20 - oil pump | |
| 21 - low pressure gas holder | |
| 22 - gas purification station | |
| 23 - compressor | |
| 24 - gas cylinder bundle | |
| 25 - reactor cladding | |
| 26 - air gap | |
| 27 - refractory sheet metal | |
| 28 - insulation plates | |
| 29 - furnace cladding | |
| 30 - legs | |

## Claims

1. The equipment for thermal decomposition of organic material containing a maximum of 15 weight % of inorganic components with a maximum moisture content of 10 %, without the access of air for gas production, containing thermal furnace (14) with a chamber heated by heaters (8), with the internal space of the furnace (14) containing reactors (5), where the furnace (14) is connected to cooling vessel (17) with a pipe fitted with separator (18) and the cooling vessel (17) is connected to gas exhaust pipe (12) extracting gas, **characterized in that**, the equipment consists of at least two units, each of them made up of the thermal furnace (14) connected with a pipe with the cooling vessel (17), fitted with a cooler (16), where inside the furnace (14) there is at least one reactor (5), surrounded by close prism-shaped reactor cladding (25), behind whose two opposite sides are placed ceramic heaters (8) separated from the cladding (25) by an air gap (26) and whose other side is surrounded by refractory sheet metal (27) and insulation plates (28), located along all walls of the furnace (14), where all lateral sides of the furnace (14) are coated on the outside by furnace cladding (29), where each reactor (5) is fitted at one end with a closable inlet opening (1) and at the other end with a closable outlet opening (3), with both openings (1) (3) leading into the external space of the furnace (14) and each of reactors (5) is fitted on the external side of the furnace (14) with an outlet opening (7) exhausting the combustion products and emptying into a collection pipe (2) extracting combustion products and leading through the connecting pipe (10) to the pipe (11) in the cooling vessel (17), where one collection pipe (2) is connected to the openings (7) of two up to eight reactors (5) and this collection pipe (2), along with the connecting pipe (10) and pipe (11) in the cooling vessel (17) form a separate branch with an outlet to the gas exhaust pipe (12) while the pipe (11) in the cooling vessel of each branch forms, under the cooling liquid (9), at least four bends along the vessel (17) width.

2. Equipment according to claim 1, **characterized in that** the thermal furnace (14) is connected to the ventilator (15) via a cooling pipe (4).

3. Equipment according to claims 1 to 2, **characterized in that**, the cooling vessel (17) is filled with a cooling liquid (9) circulating in cooling vessel (17) using a circulation pump (6) and each pipe (11) branch in the cooling vessel is connected to the separator (18) leading into the separation tank (19) with an oil pump (20).

4. Equipment according to claims 1 to 3, **characterized in that**, the cooling vessel (17) has a width of 4 m to 5.5 m.

5. Equipment according to claims 1 to 4, **characterized in that**, the gas exhaust pipe (12) extracting gas from each of the unit leads from the cooling vessel (17) of the unit and empties into the common gas exhaust pipe (13) extracting gas and leading into the low pressure gas holder (21) connected with a gas purification station (22), which is connected to a compressor (23) or the gas exhaust pipe (12) extracting gas leads from the cooling vessel (17) of the unit and empties into the low pressure gas holder (21) connected with the gas purification station (22), which is connected to a compressor (23).
